# EUROPÄISCHE PATENTSCHRIFT

(11) **EP 1 246 960 B1**
(45) Veröffentlichungstag und Bekanntmachung des Hinweises auf die Patenterteilung: **27.10.2004**
(21) Anmeldenummer: 00990670.2
(22) Anmeldetag: 07.12.2000
(51) Int. Cl.: D05B 69/12, H02K 21/12

(54) **ANTRIEB FÜR EINE NÄHMASCHINE, INSBESONDERE EINE INDUSTRIENÄHMASCHINE**
DRIVE FOR A SEWING MACHINE, IN PARTICULAR AN INDUSTRIAL SEWING MACHINE
ORGANE D'ENTRAINEMENT POUR UNE MACHINE A COUDRE, NOTAMMENT POUR UNE MACHINE A COUDRE INDUSTRIELLE

(30) Priorität: 18.12.1999 DE 19961201
(43) Veröffentlichungstag der Anmeldung: 09.10.2002
(73) Patentinhaber: Frankl & Kirchner GmbH. & Co. KG Fabrik für Elektromotoren und elektrische Apparate, D-68723 Schwetzingen (DE)
(72) Erfinder: NOHL, Gerd, Friedrich, 69231 Rauenberg (DE)
(74) Vertreter: Schneck, Herbert, Dipl.-Phys., Dr.
(86) Internationale Anmeldenummer: PCT/EP2000/012343
(87) Internationale Veröffentlichungsnummer: WO 2001/044554

(56) Entgegenhaltungen:
- DE-A- 19 704 769
- DE-A- 19 810 397
- US-A- 4 505 366

## Beschreibung

Die Erfindung richtet sich auf einen Antrieb für eine Nähmaschine, insbesondere eine Industrienähmaschine, umfassend einen Nähkopf mit einer in diesem gelagerten Hauptwelle und ein Handrad am hinteren Ende der Hauptwelle, wobei der Antrieb direkt auf die Hauptwelle der Nähmaschine wirkt.

Nähmaschinen mit einem derartigen Direktantrieb sind als Haushaltsnähmaschinen seit langem bekannt. Gleichstrommotoren zum Antrieb von Industrienähmaschinen sind aus EP 81 684 A 1 und EP 366 892 A1 bekannt. Die DE 198 10 397 A1 beschreibt einen Antrieb, bei welchem das Handrad als Außenläufermotor ausgebildet ist, und zwar in Form eines bürstenlosen Gleichstrommotors. Dabei ist der Innenstator fest mit dem Nähmaschinengehäuse verbunden und der Außenrotor sitzt auf der anzutreibenden Nähmaschinenwelle. Die DE 198 27 846 beschreibt einen Nadelstangen-Linearantrieb, mit welchem die Nadelstange direkt angetrieben wird.

Hiervon ausgehend liegt der Erfindung die Aufgabe zugrunde, bei einer Nähmaschine einen Direktantrieb der Hauptwelle zu realisieren und unter Wahrung der grundsätzlichen Vorteile eines solchen Direktantriebs ein verbessertes Antriebsverhalten bzw eine günstigere Antriebsleistung bei kostengünstigem Aufbau zu erzielen.

Diese Aufgabe wird erfindungsgemäß dadurch gelöst, daß der Antrieb als Transversalflußmotor ausgebildet ist.

Derartige Transversalflußmotoren sind an sich, z.B. zum Antrieb von Lokomotiven schon bekannt. Beispielsweise beschreibt die DE 44 30 139 C2 einen Transversalflußmotor, wobei ausgeführt wird, daß diese Antriebsart gegenüber allen anderen Arten elektrischer Maschinen den Vorteil aufweist, daß Konstruktionen mit mehrfach größerer Kraftdichte und gleichzeitig nennenswert kleineren Verlusten möglich sind. Die transversale Anordnung der Magnetkreise erfolgt in Kombination mit einer in Umfangsrichtung verlaufenden Ringwicklung. Das Maximum der Kraftdichte wird für kleine Polteilungen etwa im Bereich zwischen 0,5 cm und 2 cm verwirklicht. Durch das Zusammenwirken gleichartiger, aber geometrisch versetzter Teilmaschinen, deren Ströme zeitlich verschoben zugeführt werden (symmetrische Drehstromsysteme), entstehen am gemeinsamen Rotor Drehmomente geringer Schwankung.

Weitere Beschreibungen von Transversalflußmotoren finden sich beispielsweise in DE 198 00 667 A1, DE 195 07 233 C2 und DE 197 04 769 C2.

In weiterer Ausgestaltung der Erfindung ist vorgesehen, daß die Lagerung der Hauptwelle der Nähmaschine gleichzeitig als Rotorlagerung dient. Hierdurch wird eine gesonderte Lagerung für den Rotor entbehrlich. Da die Hauptwelle ohnehin vergleichsweise aufwendig gelagert ist, wird den Lageranforderungen für einen Transversalflußmotor Rechnung getragen. Erforderlichenfalls kann am freien hinteren Ende der Welle noch eine Zusatzlagerung vorgesehen sein. Der Motor ist dann in einer Hohlwellen-Version ausgeführt. Eine Drehmomentstütze verhindert das Mitdrehen des Motors.

Der grundsätzliche Vorteil der erfindungsgemäßen Ausgestaltung besteht darin, daß der Motor aus einfachen Einzelteilen aufgebaut ist, die gesondert gefertigt werden können. Die Ausgestaltung der Wicklungen ist besonders einfach. Durch Ausnutzung der ohnehin vorhandenen Lager der Hauptwelle der Nähmaschine wird der mechanische Aufwand minimiert.

Eine besonders vorteilhafte Ausführungsform sieht vor, daß das Handrad als Rotor ausgebildet ist und der Stator drehfest mit dem Nähkopf der Nähmaschine verbunden ist.

Bei dieser Ausführungsform kann das Handrad einen zylinderförmigen Abschnitt aufweisen, der koaxial zur Hauptwelle verläuft, wobei an der Innenseite dieses zylinderförmigen Abschnitts radial nach innen ragende magnetische Rückschlüsse befestigt sind, auf welchen axial voneinander beabstandet radial nach innen ragende Magnetelemente angebracht sind.

Dabei ist vorteilhafterweise weiterhin vorgesehen, daß an dem Stator radial fluchtend mit den Magnetelementen U-förmige, sich radial nach außen erstreckende und öffnende Polsegmente angeordnet sind, wobei im U-Innenraum der Polsegmente je eine Wicklung verläuft.

Nachfolgend wird die Erfindung anhand eines bevorzugten Ausführungsbeispiels in Verbindung mit der Zeichnung näher erläutert. Dabei zeigen:
- Fig. 1: eine schematische Seitenansicht zur Erläuterung des Prinzipaufbaus eines Transversalflußmotors,
- Fig. 2: einen Schnitt längs der Linie II-II in Fig. 1,
- Fig. 3: einen Schnitt längs der Linie III-III in Fig. 1,
- Fig. 4: eine schematische Darstellung eines erfindungsgemäßen, unter dem Handrad einer Nähmaschine angeordneten Transversalflußmotors,
- Fig. 5: einen Schnitt längs der Linie V-V in Fig. 4,
- Fig. 6: eine vergrößerte Darstellung des Bereichs rechts unten in Fig. 4,
- Fig. 7: eine Ausschnittsdarstellung aus Fig. 6 zur Erläuterung des magnetischen Flusses und
- Fig. 8 und 9: schematische Schnittdarstellungen zweier weiterer axialer Bauweisen.

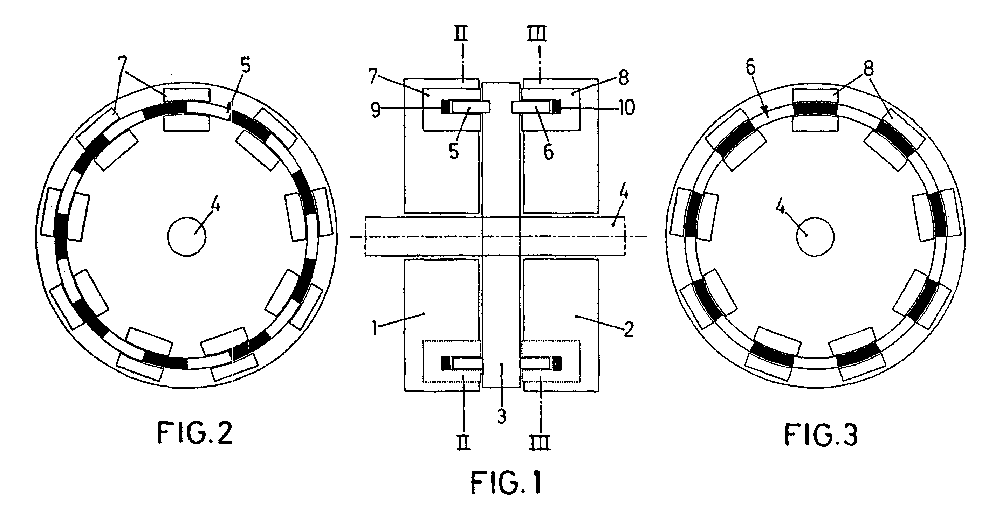

In Fig. 1 bis 3 ist der Prinzipaufbau eines 2-phasigen, zweiseitigen Transversalflußmotors mit neun Polpaaren dargestellt.

Ein derartiger Motor umfaßt zwei Gehäuseteile 1, 2 beiderseits eines Rotors 3, der mit einer Welle 4 drehfest verbunden ist.

Mit dem Rotor 3 sind zwei Magnetringe 5, 6 fest verbunden, z.B. durch Pressen oder Verkleben.

In den Gehäuseteilen 1 bzw. 2 sind Polsegmente 7 bzw. 8 angeordnet, die die Magnetringe 5 bzw. 6 U-förmig umgreifen, wobei in den U-Böden der Polsegmente 7, 8 Wicklungen 9, 10 verlaufen, die parallel zueinander in Fig. 1 kreisförmig in die Zeichenebene hinein bzw. aus dieser herauslaufen, d.h. sie verlaufen konzentrisch zur Welle 4.

Vergleicht man die Dreh-Phasen-Lage der Magnete in den Magnetringen 5 und 6, die auf dem Rotor 3 angeordnet sind, so ist (vgl. Fig. 2 relativ zu Fig. 3) erkennbar, daß ein Versatz der Magnetringe 5, 6 relativ zueinander in Umfangsrichtung vorgesehen ist, wie dies bei derartigen Motoren gattungsgemäß vorgesehen ist.

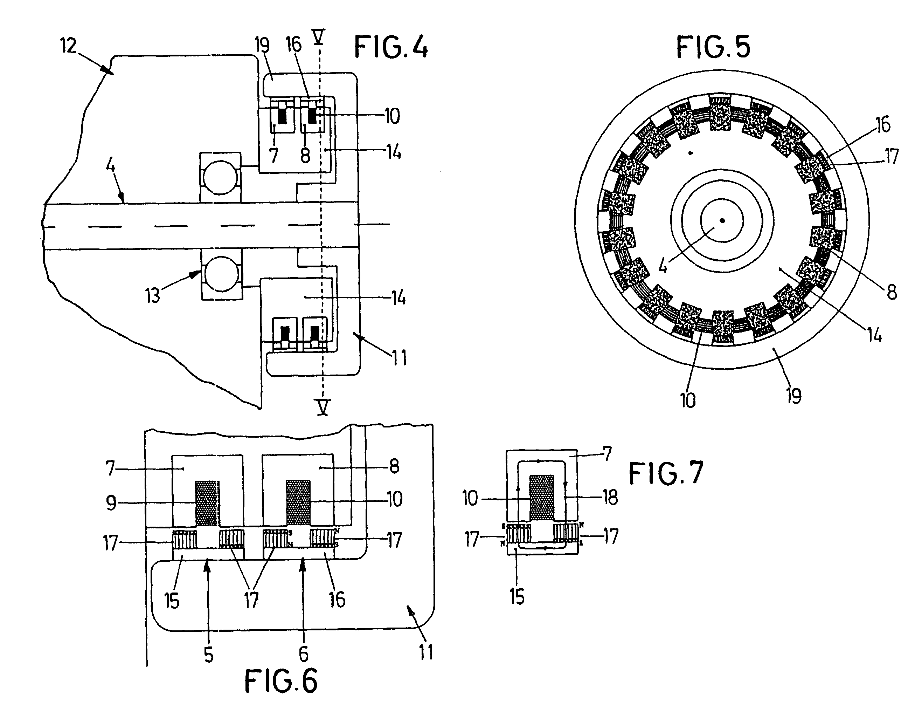

Die Fig. 4 bis 7 veranschaulichen die Integration eines derartigen Transversalflußmotors in das Handrad 11 einer Nähmaschine 12, deren Kopf (nur schematisch dargestellt) eine Hauptwelle 4 aufweist, die über Kugellager 13, wovon in der Zeichnung lediglich eines erkennbar ist, gelagert ist.

Das Handrad 11 umschließt den mit dem Kopf der Nähmaschine 12 verbundenen Stator 14, auf welchem die Polsegmente 7, 8 derart angeordnet sind (im Unterschied zu der Prinzipdarstellung in Fig. 1 bis 3), daß deren U-Böden radial nach innen und deren U-Öffnung radial nach außen orientiert ist. Im Inneren dieser U-förmigen Polsegmente 7, 8 verlaufen die Windungen 9, 10 senkrecht zur Zeichenebene in den Fig. 4, 6 und 7.

Das Innere des Handrades 11, welches drehfest mit der Hauptwelle 4 verbunden ist, dient als Rotor. Die beiden Magnetringe 5, 6 werden definiert durch magnetische Rückschlüsse 15, 16, auf welchen Magnetelemente 17 in einem Abstand voneinander angeordnet sind, welcher der Öffnung der U-förmigen Polsegmente 7, 8 entspricht, wobei die Magnetelemente 17 auf ein und demselben magnetischen Rückschluß 5 bzw. 6 entgegengesetzte Polarität aufweisen, so daß sich in Verbindung mit den Polsegmenten 7, 8 ein in Fig. 7 dargestellter geschlossener magnetischer Fluß 18 ergibt.

Die Polsegmente 17 bzw. die Magnetringe 5, 6 sind auch bei dieser radialen Anordnung ebenso wie bei der Darstellung in Fig. 1 bis 3 in Umfangsrichtung gegeneinander um ein Viertel eines Polpaarwinkels versetzt angeordnet.

In der Schnittdarstellung gemäß Fig. 5 ist der zylinderförmige Abschnitt 19 des Handrades 11 erkennbar, der den Stator 14 (vgl. Fig. 4) umschließt. Hierauf sitzen die magnetischen Rückschlüsse 15 bzw. 16 und auf diesen wiederum die Polsegmente 17. Diese sind durch einen Luftspalt 19 getrennt von den Polsegmenten 8, die am Stator 14 befestigt sind, und durch die die Wicklung 10 konzentrisch mit der Hauptwelle 4 verläuft.

Der so gebildete Motor weist also zwei Phasen und zwei Reihen bei 18 Magnetsegmenten 17 auf.

Die Ansteuerung der Wicklungen 9, 10 erfolgt nach dem Muster für einen 2-Phasen-Schrittmotor, beispielsweise gemäß der Steuerung L 297, wie sie beispielsweise beginnend auf Seite 83 im SGS-Handbuch "POWER LINEAR ACTUATORS", second edition, issued January 1984, beschrieben wird.

Neben der vorstehend beschriebenen Ausführungsform sind auch noch 2-phasige, 1-reihige Bauweisen denkbar, wobei die Wicklungen 9, 10 dann mäanderförmig konfiguriert sind und jeweils ein Polsegment überspringen. Es sind auch noch 3-phasige, 3-reihige Bauformen möglich. Eine noch komplizierte Bauform ist eine 3-phasige, 1-reihige Ausführungsform, wobei eine Einzelpolbewicklung vorgesehen sein muß. Die Ansteuereinheit besteht dann aus drei Einzelpolen, die im Abstand von 120° des Polpaarwinkels angeordnet sind. Auf dem Stator können mehrere derartige Ansteuereinheiten vorgesehen sein.

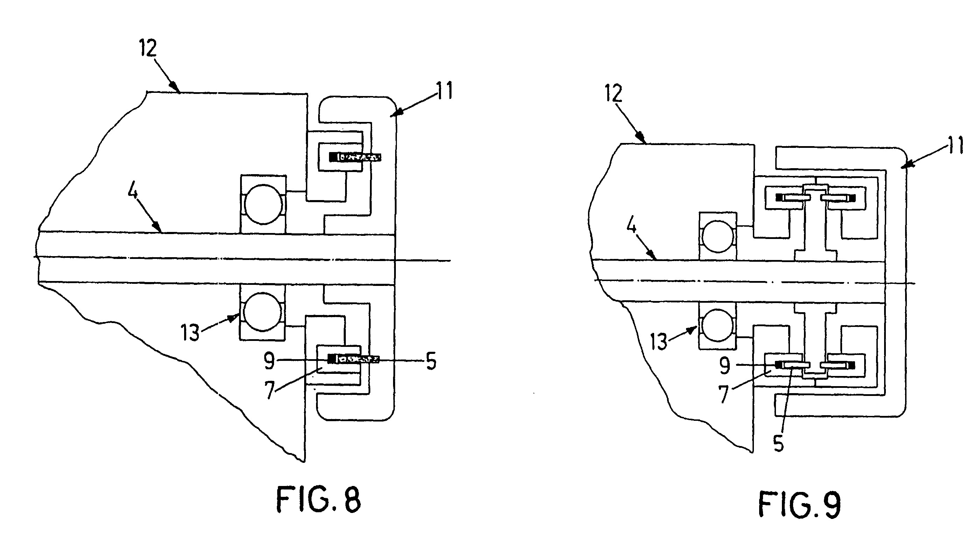

In Fig. 8 ist eine axiale Bauweise dargestellt, bei welcher der Magnetring 5 in das Handrad 11 eingelassen ist. So kann eine einseitige, einreihige Ausführungsform mit zwei Phasen und beispielsweise 18 Polpaaren und 9 Polsegmenten realisiert werden.

Fig. 9 zeigt eine Ausführungsform einer axialen Bauweise mit zweiseitigem Aufbau und zwei Phasen.

## Patentansprüche

1. Antrieb für eine Nähmaschine, insbesondere eine Industrienähmaschine, umfassend einen Nähkopf mit einer darin gelagerten Hauptwelle (4), an deren hinterem Ende ein Handrad (11) angeordnet ist, wobei der Antrieb direkt auf die Hauptwelle (4) der Nähmaschine wirkt, **dadurch gekennzeichnet, daß** der Antrieb als Transversalflußmotor ausgebildet ist.

2. Antrieb nach Anspruch 1, **dadurch gekennzeichnet, daß** die Lagerung der Hauptwelle (4) der Nähmaschine (12) gleichzeitig als Rotorlagerung ausgebildet ist.

3. Antrieb nach Anspruch 2, **dadurch gekennzeichnet, daß** im Bereich des Handrades (11) eine Zusatzlagerung, insbesondere in Form eines Kugel- oder Wälzlagers, vorgesehen ist.

4. Antrieb nach Anspruch 1, **dadurch gekennzeichnet, daß** das Handrad (11) als Rotor ausgebildet ist und der Stator (14) drehfest mit dem Nähkopf der Nähmaschine (12) verbunden ist.

5. Antrieb nach Anspruch 4, **dadurch gekennzeichnet, daß** das Handrad einen zylinderförmigen Abschnitt (19) aufweist, der koaxial zur Hauptwelle (4) verläuft, und daß an der Innenseite dieses zylinderförmigen Abschnitts (19) radial nach innen ragende magnetische Rückschlüsse (15, 16) befestigt sind, auf welchen axial voneinander beabstandet radial nach innen ragende Magnetelemente (17) angebracht sind.

6. Antrieb nach Anspruch 5, **dadurch gekennzeichnet, daß** an dem Stator (14) radial fluchtend mit den Magnetelementen (17) U-förmige, sich radial nach außen erstreckende und öffnende Polsegmente (7, 8) angeordnet sind, wobei im U-Innenraum der Polsegmente (7, 8) je eine Wicklung (9, 10) verläuft.

## Claims

1. Drive for a sewing machine, in particular an industrial sewing machine, comprising a sewing head having a main shaft (4) supported therein, on the rear end of which a balance wheel (11) is arranged, wherein the drive directly engages the main shaft (4), **characterized in that** the drive is a motor with transverse flux.

2. Drive according to claim 1, **characterized in that** the bearing of the main shaft (4) of the sewing machine (12) is a rotor bearing as well.

3. Drive according to claim 2, **characterized in that** an additional bearing is provided in the area of the balance wheel (11), in particular in the form of a ball or roller bearing.

4. Drive according to claim 1, **characterized in that** the balance wheel (11) is a rotor and that the stator (14) is non-rotatably connected to the sewing head of the sewing machine (12).

5. Drive according to claim 4, **characterized in that** the balance wheel has a cylindrical section (19) running coaxially to the main shaft (4), and that magnetic feed back (15, 16) protruding radially inwards are fastened to the inside of said cylindrical section (19), on which magnetic elements (17) protruding radially inwards are arranged axially separated from each other.

6. Drive according to claim 5, **characterized in that** U-shaped, pole segments (7, 8) protruding radially outwards and opening are arranged at the stator (14) in radial alignment with the magnetic elements (17), wherein there is a winding (9, 10) in each U-internal space of the pole segments (7, 8).

## Revendications

1. Entraînement pour une machine à coudre, notamment pour une machine à coudre industrielle, comportant une tête de couture dans laquelle est monté un arbre principal (4), sur l'extrémité arrière duquel est disposé un volant (11), l'entraînement agissant directement sur l'arbre principal (4) de la machine à coudre, **caractérisé en ce que** l'entraînement est réalisé sous la forme d'un moteur à flux transversal.

2. Entraînement selon la revendication 1, **caractérisé en ce que** le palier de l'arbre principal (4) de la machine à coudre (12) est réalisé simultanément en tant que palier de rotor.

3. Entraînement selon la revendication 2, **caractérisé en ce que**, dans la zone du volant (11), il est prévu un palier supplémentaire, notamment sous la forme d'un roulement à billes ou d'un palier à roulement.

4. Entraînement selon la revendication 1, **caractérisé en ce que** le volant (11) est réalisé sous la forme d'un rotor, et **en ce que** le stator (14) est relié solidairement en rotation à la tête de couture de la machine à coudre (12).

5. Entraînement selon la revendication 4, **caractérisé en ce que** le volant comporte un tronçon cylindrique (19), qui s'étend coaxialement à l'arbre principal (4), et **en ce que** des bouclages magnétiques (15, 16) faisant radialement saillie vers l'intérieur sont fixés sur la face intérieure de ce tronçon cylindrique (19), sur lesquels sont fixés des éléments magnétiques (17) espacés axialement les uns des autres, et faisant radialement saillie vers l'intérieur.

6. Entraînement selon la revendication 5, **caractérisé en ce que** des segments polaires (7, 8) en forme de U s'étendant radialement vers l'extérieur et s'ouvrant, sont disposés sur le stator (14) en étant radialement alignés avec les éléments magnétiques (17), un bobinage (9, 10) étant prévu dans l'espace intérieur en forme de U de chacun des segments polaires (7, 8).
